# FASCICULE DE BREVET EUROPEEN

(11) **EP 0 599 760 B1**
(45) Date de publication et mention de la délivrance du brevet: **02.06.1999**
(21) Numéro de dépôt: 93470030.3
(22) Date de dépôt: 16.11.1993
(51) Int. Cl.: C22B 5/14, C21B 13/00

(54) **Installation de réduction du minerai de fer utilisant des lits de particules solides fluidisés par un gaz réducteur**
Anlage zum Reduzieren von Eisenerzen in einer durch Reduktionsgase aufgewirbelten Schicht aus festen Teilchen
Installation for iron ore reduction in a bed of solid particles fluidized by a reducing gas

(30) Priorité: 27.11.1992 FR 9214487
(43) Date de publication de la demande: 01.06.1994
(73) Titulaire: SOLLAC S.A., 92800 Puteaux (FR); Sogepass, 57360 Amneville (FR)
(72) Inventeur: Delebarre, Arnaud, F-57000 Metz (FR); De Lassat de Pressigny, Yann, F-57070 Metz (FR)
(74) Mandataire: Ventavoli, Roger

(56) Documents cités:
- EP-A- 0 255 180
- EP-A- 0 543 758
- EP-A- 0 543 758
- DE-A- 2 524 540
- DE-B- 1 767 628
- US-A- 2 742 353
- US-A- 2 742 354

## Description

L'invention concerne le domaine de la réduction du minerai de fer, notamment dans des installations fonctionnant avec un lit fluidisé circulant.

Actuellement, des recherches sont activement conduites afin de mettre au point des procédés sidérurgiques qui pourraient se substituer au haut-fourneau. Les inconvénients du haut-fourneau que de tels procédés visent à éliminer sont son manque de souplesse de fonctionnement, et la nécessité de lui associer une cokerie et une installation d'agglomération du minerai de fer. Par ailleurs, il faudrait que les nouveaux procédés conservent les excellentes performances énergétiques du haut fourneau.

Ces nouveaux procédés sont souvent désignés par le terme : procédés de "fusion réduction" ou "smelting reduction". L'un d'entre eux associe deux réacteurs. L'un de ces réacteurs produit à partir de minerai de fer du minerai très fortement réduit à l'état métallique, qui est enfourné dans le deuxième réacteur pour être transformé en fonte liquide. Les circuits gazeux de ces deux réacteurs peuvent être liés l'un à l'autre, ou être totalement indépendants.

Une forme de réalisation particulière d'un tel procédé est décrite par exemple dans le Brevet Européen EP 255180 et dans la Demande de brevet français n° 91.14467. La réaction de réduction du minerai de fer s'effectue en faisant réagir un lit fluidisé circulant, formé par des particules de minerai en cours de réduction et de semi-coke, avec un gaz réducteur (mélange CO/CO₂/H₂/H₂O) qui assure également la fluidisation des matières solides. Celle-ci a lieu dans une première partie du réacteur. Les gaz chargés en particules de minerai en cours de réduction et de semi-coke passent ensuite dans un cyclone. Les gaz s'échappent alors du réacteur, tandis que les particules descendent dans un gazéifieur, où sont introduits séparément ou ensemble du charbon et de l'oxygène dans le but de former du CO et de l'hydrogène qui vont contribuer à la réduction du minerai. Les matières solides et les gaz reviennent ensuite dans la première partie du réacteur, d'où une fraction des matières solides (minerai réduit et semi-coke) est extraite périodiquement ou continûment. Du minerai neuf est introduit dans le courant de matières entre le cyclone et le gazéifieur. Les gaz qui se sont échappés du cyclone sont épurés et réintroduits dans le gazéifieur et à la base de la première partie du réacteur, où ils peuvent rejouer leur rôle de milieu fluidisant et réactionnel.

Les matières solides extraites du réacteur de réduction qui vient d'être décrit sont ensuite dirigées vers le réacteur de fusion pour contribuer à y produire de la fonte liquide. Comme on l'a dit, ces matières sont composées pour l'essentiel d'un mélange de minerai de fer fortement réduit (à environ 75 % au moins) et de semi-coke avec accessoirement d'autres matières non ferreuses : impuretés provenant du minerai et additifs éventuels. Leur teneur en semi-coke (qui peut atteindre 50 %) est en fait supérieure à celle qui est nécessaire pour former la fonte (de l'ordre de 5 à 25 %). Cela conduirait à une production excessive de gaz carbonés dans le réacteur de fusion, et à une forte consommation de matières carbonées de l'ensemble de l'installation, consommation qu'il est souhaitable d'abaisser. Il faut donc développer des moyens permettant une sortie sélective du fer métallisé et du semi-coke afin de pouvoir régler les teneurs en carbone du lit fluidisé et du produit extrait du réacteur de réduction à des niveaux différents et compatibles avec un bon fonctionnement des réacteurs de réduction et de fusion. Le document US2.742.354 propose à cet effet d'insérer sur le circuit de matières solides un lit dense de ségrégation où les particules de fer peuvent être extraites de l'installation de manière privilégiée, accompagnées d'une quantité minimale de matières carbonées. Ce lit dense est placé en amont de la zone où sont créés les gaz réducteurs.

Un autre problème posé par une telle installation est que les particules de fer en circulation transitent massivement par le gazéifieur, où elles risquent d'être réoxydées par l'oxygène qui y est injecté. Cela conduit à une diminution du rendement de l'installation. D'autre part, ces particules de fer risquent de se coller aux parois du réacteur, en particulier dans les zones à forte agitation telles que le cyclone. Il importe donc que, une fois obtenues, ces particules de fer métallique séjournent le moins longtemps possible dans le réacteur.
Le but de l'invention est de proposer un procédé de réduction du minerai de fer fondé sur les principes décrits précédemment, et permettant d'une part de diminuer considérablement la quantité de fer métallique passant dans le gazéifieur, et d'autre part d'enrichir en fer métallique les matières extraites de l'installation.
A cet effet, l'invention a pour objet

Installation de réduction du minerai de fer parcourue par un courant de particules solides et comprenant :
- des moyens d'introduction de particules de minerai de fer dans ladite installation ;
- un réacteur de préréduction contenant un lit de particules, notamment de minerai de fer en cours de réduction, pourvu de moyens pour fluidiser ledit lit, et comportant un dispositif d'injection de gaz réducteur contenant du CO et de l'hydrogène dans ledit réacteur de préréduction (56, 70), ledit gaz assurant la fluidisation dudit lit de particules (59, 71) ;
- un réacteur de gazéification (37) comprenant des moyens de production de CO et d'hydrogène à partir de matières carbonées (42) et d'oxygène, les particules solides présentes dans ledit réacteur (37) formant un lit fluidisé circulant (83) ;
- des moyens (50) de séparation dudit gaz réducteur et des particules qu'il transporte, et des moyens de renvoi dudit gaz réducteur ainsi épuré dans ledit réacteur de préréduction (56, 70) ;
- des moyens d'extraction des particules, notamment de fer métallique, produites par l'installation, comprenant un lit fluidisé dense de particules (64, 74) assurant une ségrégation desdites particules de fer métallique ;
- des moyens pour faire communiquer ledit réacteur de préréduction (56, 70) et un compartiment de ségrégation pourvu de moyens (62, 79) pour y former ledit lit fluidisé dense (64, 74) et de moyens (66, 67, 81, 82) d'extraction desdites particules dudit lit dense (64, 74) ;
caractérisée en ce que ladite installation comprend successivement sur le parcours desdites particules solides :
- ledit réacteur de gazéification (37) renfermant ledit lit fluidisé circulant (83) de particules solides ;
- lesdits moyens de séparation (50) dudit gaz réducteur et des particules qu'il transporte ;
- une conduite (49) faisant communiquer ledit réacteur de gazéification (37) avec lesdits moyens (50) de séparation desdites particules et dudit gaz réducteur sortant du réacteur de gazéification (37) ;
- ledit réacteur de préréduction (56, 70) recueillant lesdites particules sortant desdits moyens de séparation (50) et renfermant ledit lit fluidisé circulant (59, 71, 72) ;
- lesdits moyens pour faire communiquer ledit réacteur de préréduction (56, 70) et un compartiment de ségrégation pourvu de moyens (62, 79) pour y former ledit lit fluidisé dense (64, 74) et de moyens (66, 67, 81, 82) d'extraction desdites particules dudit lit dense (64, 74) ;
- et une conduite (65, 80) faisant communiquer ledit compartiment de ségrégation et ledit réacteur de gazéification (37), de manière à y amener les gaz et les particules solides s'échappant dudit compartiment de ségrégation.
Comme on l'aura compris, l'invention consiste, dans les installations de réduction du minerai de fer du type utilisant un lit fluidisé circulant et comportant un lit fluidisé dense à l'intérieur duquel peut s'opérer une ségrégation entre les particules de fer métallique et les autres particules présentes dans l'installation, à disposer le lit dense entre le réacteur de préréduction et le réacteur de gazéification. Cela permet de limiter la recirculation des particules de fer métallique dans l'installation, et par là même les risques de voir ces particules être réoxydées à l'intérieur du gazéifieur ou se coller aux parois de l'installation.

L'invention sera mieux comprise à la lecture de la description qui suit, faisant référence aux figures annexées suivantes :
- la figure 1 qui montre schématiquement un premier exemple d'installation de réduction du minerai de fer qui ne fait partie de l'invention ;
- la figure 2 qui montre un premier exemple d'une installation selon l'invention ;
- la figure 3 qui montre un deuxième exemple d'une telle installation.

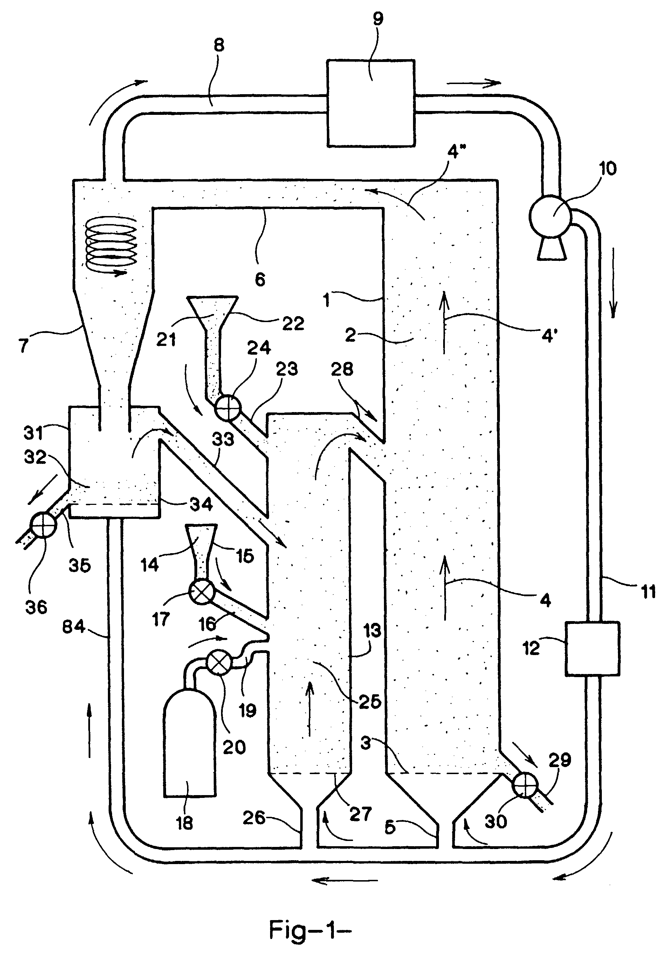

La variante de la figure 1 représente un exemple d'installation, dérivé des installations qui sont l'objet des documents précédemment cités. Elle comprend un réacteur de préréduction 1 renfermant un lit fluidisé circulant 2 formé de particules de minerai de fer en cours de réduction, de particules de fer métallique résultant de cette réduction, et des particules de semi-coke. Un support 3 perméable aux gaz, tel qu'une grille, est placé à la partie inférieure du réacteur de préréduction 1 pour éviter que des particules de grosse taille ne descendent dans le fond du réacteur 1. Un courant gazeux de fluidisation traverse l'ensemble de l'installation, et notamment le réacteur de préréduction 1, comme le symbolisent les flèches 4, 4', 4". Ce gaz de fluidisation est un gaz réducteur, à savoir un mélange CO/CO₂/H₂/H₂O qui est injecté à la base du réacteur 1 par une conduite 5. Il se déplace à une vitesse de l'ordre de 2 à 10 m/s. Au cours de leur cheminement dans le réacteur 1, les particules de minerai de fer initialement à l'état naturel oxydé subissent une réduction en fer métallique par le CO et l'hydrogène des gaz de fluidisation. Les gaz et les particules solides s'échappent du réacteur de préréduction 1 par une conduite 6 et pénètrent ensuite dans un cyclone 7, dans lequel ils sont séparés les uns des autres. Les gaz sont évacués du cyclone par une conduite 8, alors que les particules solides retombent dans la partie inférieure du cyclone 7 et poursuivent leur parcours dans l'installation, comme on l'expliquera plus loin. Après leur sortie du cyclone les gaz sont épurés de la vapeur d'eau et du CO₂ qu'ils contiennent dans un réacteur approprié 9 d'un type connu en lui-même, sont renvoyés par des moyens adaptés symbolisés par la pompe 10 et la conduite 11 vers la base du réacteur 1 après être passés par un préchauffeur 12, et sont à nouveau utilisés pour la fluidisation et la réduction du minerai à l'intérieur du réacteur 1.

Conformément à l'Art Antérieur cité, l'installation comporte également, placé sur le circuit des matières entre le cyclone 7 et le réacteur de préréduction 1, un gazéifieur 13. Celui-ci a pour fonctions de générer les gaz servant à la fluidisation et à la circulation des particules, et de fournir l'énergie nécessaire à l'équilibre du bilan thermique. A cet effet, on y réalise des injections d'oxygène et de matières carbonées, telles que du charbon, ces matières carbonées étant en excès. On forme ainsi du CO et de l'hydrogène (avec une certaine proportion de CO₂ et de vapeur d'eau) qui vont réagir avec le minerai pour le réduire en fer et s'oxyder eux-mêmes en CO₂ et vapeur d'eau, alors que le charbon en excès se transforme en semi-coke. La température des gaz est de l'ordre de 950°C, et la proportion de CO₂ et de vapeur d'eau qu'ils contiennent en régime permanent est d'environ 30 à 40 %.

Les matières carbonées 14 contenues dans une trémie 15, sont introduites dans le gazéifieur 13 par une conduite 16, et leur admission est commandée par une vanne 17. L'oxygène, contenu dans un réservoir 18, est de même insufflé dans le gazéifieur 13 par une conduite 19, et son admission est commandée par une vanne 20. Dans cette forme de réalisation, le CO est créé par réaction des matières carbonées avec l'oxygène à l'intérieur du gazéifieur 13. On peut également, comme proposé dans la demande FR 91 14467 déjà citée, former le CO et l'hydrogène dans un brûleur en amont duquel les conduites 16 et 19 se rejoignent, donc avant que les matières carbonées et l'oxygène ne pénètrent dans le gazéifieur 13. Cette dernière configuration permet d'éviter la réoxydation dans le gazéifieur 13 de particules de fer au contact de l'oxygène non encore combiné au carbone. Dans l'exemple représenté, c'est également au niveau du gazéifieur 13 qu'a lieu l'introduction de particules de minerai de fer neuf 21 dans le circuit des matières. Ces particules sont stockées dans une trémie 22 et introduites dans le gazéifieur par une conduite 23 munie d'une vanne 24.

L'introduction dans le gazéifieur 13 des diverses particules solides et la formation des gaz a pour effet que dans le gazéifieur 13, il se forme un lit fluidisé 25 de particules solides, tout comme dans le réacteur de préréduction 1. Optionnellement, la fluidisation des particules est également assurée par des gaz provenant d'une conduite 26, dérivée de la conduite 11, et débouchant dans le fond du gazéifieur 13. Une grille 27 perméable aux gaz empêche que d'éventuelles particules trop grosses pour être fluidisées ne descendent jusque dans la conduite 26 et l'obstruent.

Le gazéifieur 13 et le réacteur de préréduction 1 sont reliés par une conduite 28, et les gaz et les particules composant le lit fluidisé peuvent ainsi circuler d'un réacteur à l'autre. Dans l'installation selon l'Art Antérieur, les matières solides résultant de l'opération peuvent être extraites de l'installation de manière intermittente ou continue au moyen d'une conduite 29 munie d'une vanne 30 et connectée à la base du réacteur de préréduction 1. Ces matières se composent habituellement de minerai réduit à 75 % au moins et de semi-coke, et sont destinées à être enfournées dans un réacteur de fusion non représenté où sera fabriquée la fonte. Dans l'installation selon l'invention, ces moyens d'extraction des matières peuvent être conservés, mais ils recueilleront en priorité les particules trop grosses pour avoir été fluidisées et qui sont tombées dans la partie inférieure du réacteur de préréduction 1.

Dans des installations selon l'Art Antérieur, la partie inférieure du cyclone 7 est reliée directement au gazéifieur 13, et les particules qui étaient véhiculées dans le lit fluidisé circulant avant le cyclone 7 passent donc dans le gazéifieur de manière indifférenciée. Au contraire, dans l'exemple de la figure 1, la partie inférieure du cyclone 7 débouche dans un troisième réacteur 31 dit "compartiment de ségrégation". Dans ce compartiment de ségrégation 31, on réalise des conditions de circulation d'un gaz telles que les particules de fer métallique et de minerai de fer fortement réduit forment la partie inférieure d'un lit fluidisé dense 32, alors que les particules de semi-coke et les plus fines particules de minerai encore peu ou pas réduit sont majoritairement entraînées par le courant gazeux, et passent dans le gazéifieur 13 en empruntant la conduite 33 qui le relie au compartiment de ségrégation 31. Les gaz assurant la fluidisation de ce lit dense 32 peuvent avantageusement (mais non obligatoirement) être eux aussi prélevés sur la conduite 11 et insufflés dans le fond du compartiment de ségrégation 31 par une conduite 84. Ainsi la réduction du minerai de fer peut être parachevée à l'intérieur du lit dense 32. Une grille perméable aux gaz 34 placée dans la partie inférieure du compartiment 31 empêche les particules de redescendre dans la conduite 84. L'évacuation intermittente ou continue des matières composant le lit dense 32 est réalisée par une conduite 35 munie d'une vanne 36. Ces matières sont donc constituées, pour leur plus grande part, de fer métallique et de minerai très fortement réduit, et sont prêtes à être enfournées dans le réacteur de fusion. Le compartiment de ségrégation 31 permet de réaliser une séparation efficace entre les matières ferrifères et les matières carbonées et ainsi de limiter la quantité de matières carbonées qui seront enfournées dans le réacteur de fusion avec le minerai de fer fortement réduit et le fer métallique.

Comme on l'a dit la conduite d'évacuation 29 habituellement présente au bas du réacteur de préréduction 1 peut avantageusement être conservée afin d'éviter une accumulation éventuelle dans le fond du réacteur 1 de grosses particules ferrifères agglomérées. Elle peut aussi permettre de fournir si nécessaire un produit plus riche en carbone que celui extrait au niveau du compartiment de ségrégation 31 et pouvant lui être mélangé pour optimiser les conditions de marche du réacteur de fusion.

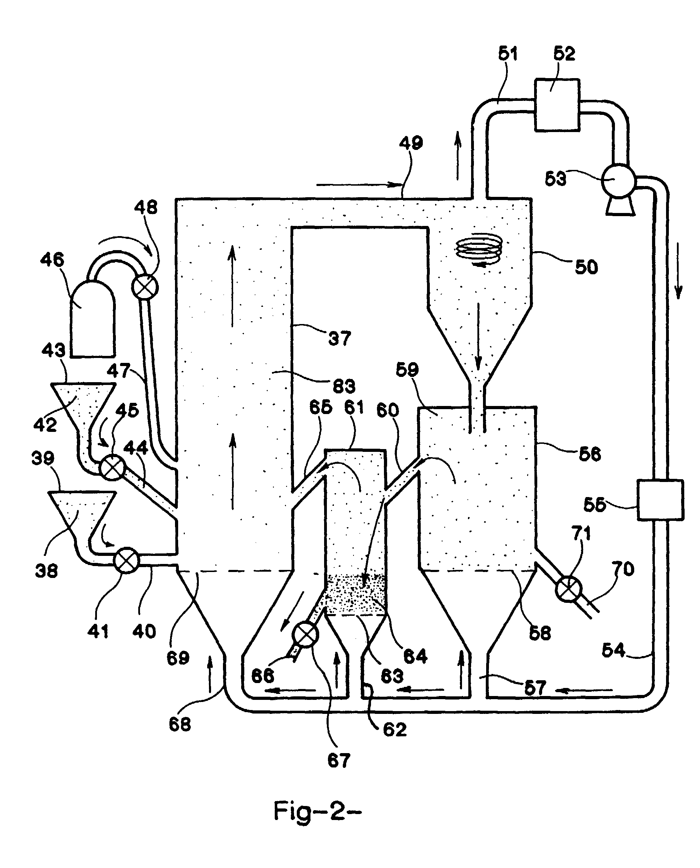

La configuration exemplifiée sur la figure 2 se distingue, selon l'invention, de celle de la figure 1 en ce que les positions respectives du réacteur de préréduction et du gazéifieur par rapport au cyclone sont inversées, et en ce que le compartiment de ségrégation se trouve placé entre le réacteur de préréduction et le gazéifieur.

Le gazéifieur 37, reçoit, comme dans l'exemple de la figure 1, du minerai de fer 38 stocké dans une trémie 39 et convoyé par une conduite 40 munie d'une vanne 41, des matières carbonées 42 stockées dans une trémie 43 et convoyées par une conduite 44 munie d'une vanne 45, et de l'oxygène stocké dans un récipient 46 et insufflé par une conduite 47 munie d'une vanne 48. Dans le gazéifieur 37 ont donc lieu la formation du CO et de l'hydrogène et la mise en circulation du lit 83 de particules de minerai et de semi-coke. Le minerai neuf y commence à être réduit en wüstite. A leur sortie du gazéifieur 37, les matières solides et gazeuses sont dirigées par la conduite 49 vers le cyclone 50 qui les sépare les unes des autres. Les gaz sont évacués par la conduite 51, décarbonatés et séchés dans le réacteur 52, et renvoyés par la pompe 53 et la conduite 54 à la base des divers réacteurs de l'installation pour assurer la fluidisation des particules solides, après être passés par le préchauffeur 55.

Quant aux matières solides, minerai en cours de réduction et semi-coke, elles passent du cyclone 50 dans le réacteur de réduction 56. Elles y sont fluidisées par les gaz (principalement CO et hydrogène) amenés dans le fond du réacteur 56 par la conduite 57, gaz qui servent également à parachever la réduction du minerai en fer métallique. Une grille perméable aux gaz 58 barrant le fond du réacteur 56 évite que les particules non fluidisées ne viennent boucher la conduite 57. La fluidisation des particules dans le réacteur 56 est réalisée de manière à former un lit circulant, qui est envoyé par une conduite 60 dans un compartiment de ségrégation 61. Ce compartiment reçoit lui aussi, dans sa partie inférieure, des gaz réducteurs de préférence prélevés sur la conduite 54 par une conduite 62, et est muni d'une grille perméable aux gaz 63. Les conditions hydrodynamiques dans ce compartiment 61 sont telles que les particules de fer et de minerai fortement réduit forment un lit dense 64 dans sa partie inférieure, alors que les matières carbonées et les fines particules de minerai non encore réduit demeurent fluidisées dans la partie supérieure du réacteur 61 au-dessus du lit dense 64, et sont envoyées par trop-plein à l'aide d'une conduite 65 dans le gazéifieur 37 pour y poursuivre leur traitement. De plus, comme les gaz de fluidisation sont de préférence fortement réducteurs, ils contribuent au parachèvement de la réduction du minerai. Les particules composant la partie basse de la couche fluidisée 64 sont extraites de manière continue ou intermittente par la conduite 66 munie d'une vanne 67, et sont dirigées vers le réacteur de fusion pour la production de fonte.

Le restant des gaz épurés circulant dans la conduite 54 peut être dirigé par la conduite 68 vers la base du gazéifieur 37, qui comporte dans sa partie inférieure une grille 69 évitant le bouchage de la conduite 68 par d'éventuelles particules de forte taille présentes dans le gazéifieur 37.

Cette configuration, comme la précédente, permet de limiter considérablement la quantité de fer métallique circulant dans le gazéifieur 37, puisqu'il est majoritairement retenu dans le compartiment de ségrégation 61.

On peut également prévoir une possibilité d'évacuation d'une portion des particules composant le lit circulant 59 dans le réacteur de préréduction 56, au moyen d'une conduite 70 munie d'une vanne 71, pour les mêmes raisons que celles exposées dans la description de l'installation de la figure 1.

Par rapport à la configuration de la figure 1 où le compartiment de ségrégation suit immédiatement le cyclone, la configuration de la figure 2, où le compartiment de ségrégation est placé entre le réacteur de préréduction et le gazéifieur, présente l'avantage d'éviter que des particules de fer métallique ne transitent en grande quantité par le cyclone. Le cyclone est en effet un endroit où, du fait des hautes énergies qui sont communiquées aux particules, les risques de collage des particules de fer fraîchement réduites aux parois de l'installation sont particulièrement grands. Et ces collages sont bien entendu à éviter, à cause de la perte de rendement de l'installation et de la détérioration de ses organes qu'ils provoquent.

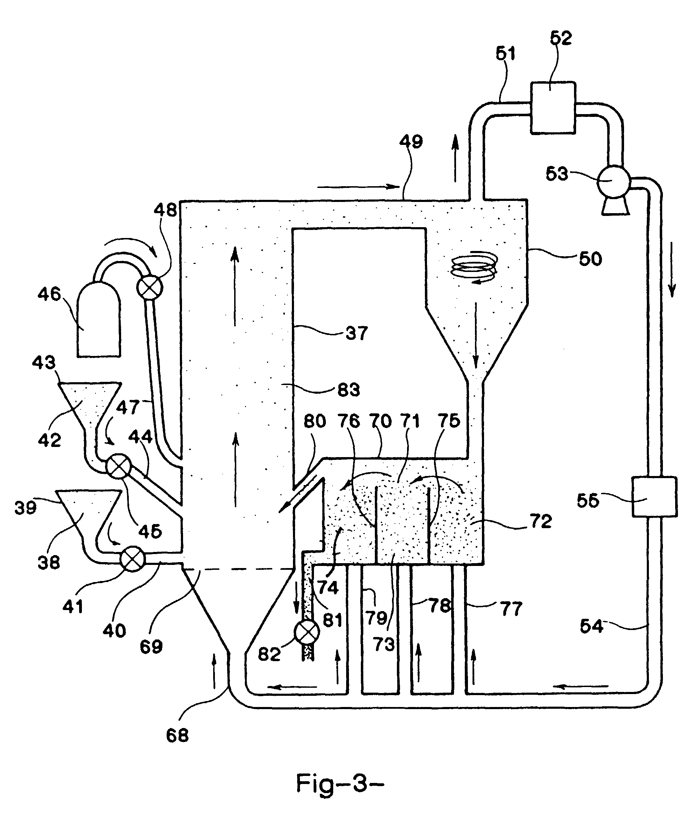

La figure 3 montre une variante de l'installation selon l'invention qui s'apparente à la précédente quant aux positions relatives du gazéifieur, du cyclone et des réacteurs de préréduction du minerai et de ségrégation des matières solides. Les organes de l'installation de la figure 2 qui se retrouvent avec des fonctions et des configurations identiques sur l'installation de la figure 3 y sont repérés par les mêmes références. La particularité de cette installation est que les opérations de réduction du minerai de fer et de ségrégation de matières solides, aboutissant à l'extraction d'un mélange très riche en particules de fer métallique, sont regroupées dans un réacteur unique 70 où les particules solides provenant du cyclone 50 forment un lit dense 71. Dans l'exemple représenté, le réacteur de réduction et de ségrégation 70 est divisé en trois compartiments 72, 73, 74 par des cloisons transversales 75, 76 qui laissent libre la zone supérieure du réacteur 70. Des conduites 77, 78, 79 piquées sur la conduite 54 envoient dans ces trois compartiments des gaz réducteurs épurés et réchauffés afin d'assurer la fluidisation de l'ensemble des particules et la réduction du minerai de fer. Dans les deux premiers compartiments 72, 73, on assure une fluidisation et un temps de séjour des diverses particules à peu près uniformes, en recherchant avant tout la réduction du minerai de fer toujours mélangé au semi-coke qui évite le collage des particules de fer. Les particules passent d'un compartiment à l'autre par débordement au-dessus des cloisons 75 et 76, et les plus fines sont facilement entraînées vers l'aval de l'installation. Dans le dernier compartiment 74, on impose une vitesse de fluidisation moindre, ce qui a pour effet d'accentuer la ségrégation des différentes espèces de particules en fonction de leur densité. Les plus légères (semi-coke, minerai non encore réduit) composent alors majoritairement la partie supérieure du lit dense 71 et retournent par débordement dans le gazéifieur 37, grâce à une conduite 80. Les plus lourdes, à savoir le fer métallique, composent majoritairement la partie inférieure du lit dense 71 et peuvent être évacuées de manière intermittente ou continue par une conduite 81 munie d'une vanne 82 en direction du réacteur de fusion.

La division du réacteur 70 en compartiments 72, 73, 74 où on recherche de manière prépondérante soit la réduction du minerai de fer pour les premiers compartiments, soit la ségrégation du fer métallique pour le dernier, permet de faire fonctionner l'installation avec une plus grande efficacité que si le réacteur 70 ne comportait qu'un seul compartiment où les conditions de fonctionnement devraient être un compromis entre les conditions optimales pour chacune de ces deux fonctions. En effet, l'efficacité de l'opération de ségrégation réalisée dans le dernier compartiment 74 est d'autant plus grande qu'elle est exécutée sur des particules de dimensions plus homogènes. Et c'est cette homogénéisation que la division du réacteur 70 en multiples compartiments aux conditions hydrodynamiques adaptées permet d'approcher. Toutefois, si on recherche une plus grande simplicité dans la construction de l'installation ou si on ne désire pas obtenir un produit final très pauvre en semi-coke, on peut se contenter d'un réacteur 70 à un seul compartiment qui assurerait à la fois la réduction du minerai et la ségrégation du fer métallique.

Il va de soi que le nombre de compartiments du réacteur 70 peut être modifié (il peut être de deux seulement, ou au contraire supérieur à trois), l'essentiel étant que le dernier compartiment au moins soit dédié prioritairement à la ségrégation des particules de fer métallique.

## Revendications

1. Installation de réduction du minerai de fer parcourue par un courant de particules solides et comprenant :
- des moyens (39, 40, 41) d'introduction de particules de minerai de fer (38) dans ladite installation ;
- un réacteur de préréduction (56, 70) contenant un lit de particules(59, 71, 72), notamment de minerai de fer en cours de réduction, pourvu de moyens pour fluidiser ledit lit, et comportant un dispositif (57, 77, 78, 79) d'injection de gaz réducteur contenant du CO et de l'hydrogène dans ledit réacteur de préréduction (56, 70), ledit gaz assurant la fluidisation dudit lit de particules (59, 71) ;
- un réacteur de gazéification (37) comprenant des moyens de production de CO et d'hydrogène à partir de matières carbonées (42) et d'oxygène, les particules solides présentes dans ledit réacteur (37) formant un lit fluidisé circulant (83) ;
- des moyens (50) de séparation dudit gaz réducteur et des particules qu'il transporte, et des moyens de renvoi dudit gaz réducteur ainsi épuré dans ledit réacteur de préréduction (56, 70) ;
- des moyens d'extraction des particules, notamment de fer métallique, produites par l'installation, comprenant un lit fluidisé dense de particules (64, 74) assurant une ségrégation desdites particules de fer métallique ;
- des moyens pour faire communiquer ledit réacteur de préréduction (56, 70) et un compartiment de ségrégation pourvu de moyens (62, 79) pour y former ledit lit fluidisé dense (64, 74) et de moyens (66, 67, 81, 82) d'extraction desdites particules dudit lit dense (64, 74) ;
caractérisée en ce que ladite installation comprend successivement sur le parcours desdites particules solides :
- ledit réacteur de gazéification (37) renfermant ledit lit fluidisé circulant (83) de particules solides ;
- lesdits moyens de séparation (50) dudit gaz réducteur et des particules qu'il transporte ;
- une conduite (49) faisant communiquer ledit réacteur de gazéification (37) avec lesdits moyens (50) de séparation desdites particules et dudit gaz réducteur sortant du réacteur de gazéification (37) ;
- ledit réacteur de préréduction (56, 70) recueillant lesdites particules sortant desdits moyens de séparation (50) et renfermant ledit lit fluidisé circulant (59, 71, 72) ;
- lesdits moyens pour faire communiquer ledit réacteur de préréduction (56, 70) et un compartiment de ségrégation pourvu de moyens (62, 79) pour y former ledit lit fluidisé dense (64, 74) et de moyens (66, 67, 81, 82) d'extraction desdites particules dudit lit dense (64, 74) ;
- et une conduite (65, 80) faisant communiquer ledit compartiment de ségrégation et ledit réacteur de gazéification (37), de manière à y amener les gaz et les particules solides s'échappant dudit compartiment de ségrégation.

2. Installation selon la revendication 1, caractérisée en ce que ledit compartiment de ségrégation constitue un réacteur (61) distinct dudit réacteur de préréduction (56, 70).

3. Installation selon la revendication 1, caractérisée en ce que, dans ledit réacteur de préréduction (70) recueillant lesdites particules solides sortant desdits moyens de séparation (50), lesdites particules sont fluidisées de manière à former ledit lit fluidisé dense (71) dans lequel a lieu la réduction du minerai de fer et la ségrégation des particules, lesdits moyens (81, 82) d'extraction des particules produites par l'installation étant connectés audit réacteur de préréduction (70).

4. Installation selon la revendication 3, caractérisée en ce que le réacteur de préréduction (70) comprend au moins une cloison transversale (75, 76) divisant ledit réacteur de préréduction (70) en une pluralité de compartiments (72, 73, 74) communiquant par leur partie supérieure et dans lesquels transitent successivement lesdites particules solides, chacun desdits compartiments (72, 73, 74) ayant ses propres moyens (77, 78, 79) de fluidisation des particules solides qu'il renferme, les moyens (72) de fluidisation d'au moins le dernier compartiment (74) étant réglés de manière à promouvoir une ségrégation des particules qu'il renferme en fonction de leur densité, et lesdits moyens (81, 82) d'extraction des particules étant connectés audit dernier compartiment (74).

5. Installation selon l'une des revendications 1 à 4, caractérisée en ce qu'elle comprend des moyens (52) de décarbonatation et de déshydratation des gaz sortant des moyens de séparation (50), et des moyens (53, 54, 57, 62, 68, 77, 78, 79, 84) pour envoyer lesdits gaz dans lesdits réacteurs de préréduction (56, 70) et/ou ledit réacteur de gazéification (37) et/ou ledit compartiment de ségrégation (61, 70).

## Patentansprüche

1. Anlage zum Reduzieren von Eisenerz, die von einen Strom aus festen Teilchen durchströmt wird und aufweist:
- Einrichtungen (39, 40, 41) zum Einführen von Eisenerzteilchen (38) in die Anlage;
- einen Reaktor zum Vorreduzieren (56, 70) mit einem Bett aus Teilchen (59, 71, 42), insbesondere aus Eisenerz in der Reduktionsphase, der mit Einrichtungen versehen ist, um das Bett aufzuwirbeln,undeineVorrichtung(57, 77, 78, 79) zum Injizieren eines CO und Wasserstoff enthaltenen Reduktionsgases in den Vorreduktionsreaktor (56, 70), wobei dieses Gas die Aufwirbelung des Teilchenbettes (59, 71) gewährleistet;
- einen Vergasungsreaktor (37) mit Einrichtungen zum Erzeugen von CO und Wasserstoff aus kohlenstoffhaltigen Materialien (42) sowie Sauerstoff, wobei die in diesem Reaktor (37) vorhandenen festen Teilchen eine zirkulierende Wirbelschicht (83) bilden;
- Einrichtungen (50) zum Trennen des Reduktionsgases und der von diesem transportierten Teilchen sowie Einrichtungen zum Rückführen des gereinigten Reduktionsgases in den Vorreduktionsreaktor (56, 70);
- Einrichtungen zum Abziehen von Teilchen insbesondere aus metallischem Eisen, die durch die Anlage erzeugt wurden, mit einem dicht mit Teilchen besetzten Wirbelbett (64, 74), welches eine Abtrennung der metallischen Eisenteilchen gewährleistet;
- Einrichtungen, um den Vorreduktionsreaktor (56, 70) kommunizieren zu lassen, und ein Abtrennabteil mit Einrichtungen (62, 79), um dort das dichte Wirbelbett zu bilden, und Einrichtungen (76, 67, 81, 82) zum Abziehen der Teilchen aus dem dichten Bett (64, 74);
gekennzeichnet dadurch, daß die Anlage aufeinanderfolgend längs des Durchlaufes der festen Teilchen aufweist:
- den Vergasungsreaktor (36), der die zirkulierende Wirbelschicht (83) aus den festen Teilchen einschließt;
- die Einrichtungen zum Trennen des Reduktionsgases und der von diesem transportierten Teilchen;
- eine Leitung (49), die den Vergasungsreaktor (37) mit den Einrichtungen (50) zum Trennen der Teilchen und des Reduktionsgases kommunizieren läßt, die aus dem Vergasungsreaktor (37) austritt;
- den Vorreduktionsreaktor (56, 70), der die Teilchen sammelt, die aus den Einrichtungen zum Trennen (50) austreten, und der die zirkulierende Wirbelschicht (59, 71, 72) einschließt;
- die Einrichtungen, um den Vorreduktionsreaktor (56, 70) kommunizieren zu lassen, und ein Abtrennabteil mit Einrichtungen (62, 79), um hier das dichte Wirbelbett (64, 74) zu bilden, und Einrichtungen (66, 67, 81, 82) zum Abziehen der Teilchen aus dem dichten Bett (64, 74);
- und eine Leitung (65, 80), die das Abtrennabteil und den Vergasungsreaktor (37) kommunizieren läßt, um dort die Gase und die festen Teilchen hinzuführen, die aus dem Abtrennabteil entweichen.

2. Anlage nach Anspruch 1, dadurch gekennzeichnet, daß das Abtrennabteil einen Reaktor (61) bildet, der von dem Vorreduktionsreaktor (56, 70) verschieden ist.

3. Anlage nach Anspruch 1, dadurch gekennzeichnet, daß in dem Vorreduktionsreaktor (70), in dem die festen Teilchen, die aus den Trenneinrichtungen (50) austreten, gesammelt werden, diese Teilchen aufgewirbelt werden, um das dichte Wirbelbett zu bilden, in dem die Reduktion des Eisenerzes und die Abtrennung der Teilchen stattfinden, wobei die Einrichtungen (81, 82) zum Abziehen der durch die Anlage erzeugten Teilchen mit den Vorreduktionsreaktor (70) verbunden sind.

4. Anlage nach Anspruch 3, dadurch gekennzeichnet, daß der Vorreduktionsreaktor (70) zumindest eine transversale Trennwand (75, 76) aufweist, die den Vorreduktionsreaktor (70) in mehrere Abteile (72, 73, 74) aufteilt, die über ihre obere Partie miteinander kommunizieren und durch die die festen Teilchen sukzessive durchziehen, wobei die Abteile (72, 73, 74) eigene Einrichtungen (77, 79, 79) zum Aufwirbeln der darin eingeschlossenen festen Teilchen aufweisen, wobei die Einrichtungen (79) zum Aufwirbeln in zumindest dem letzten Abteil (74) so gesteuert sind, um eine Trennung der darin eingeschlossenen Teilchen als Funktion ihrer Dichte voranzutreiben, und wobei die Einrichtungen (81, 82) zum Abziehen der Teilchen mit diesem letzten Abteil (74) verbunden sind.

5. Anlage nach einem der Ansprüche 1 bis 4, dadurch gekennzeichnet, daß sie Einrichtungen (52) zur Entkarbonisierung und Dehydratisierung der die Trenneinrichtungen (50) verlassenden Gase und Einrichtungen (53, 54, 57, 62, 68, 77, 78, 79, 84) aufweist, um die Gase in die Vorreduktionsreaktoren (56, 70) und/oder den Vergasungsreaktor (37) und/oder das Abtrennabteil (61, 70) zu leiten.

## Claims

1. Plant for the reduction of iron ore, through which a stream of solid particles flows, this plant comprising:
- means (39, 40, 41) for introducing particles of iron ore (38) into the said plant;
- a prereduction reactor (56, 70) containing a bed of particles (59, 71, 72), especially particles of iron ore undergoing reduction, which is provided with means for fluidizing the said bed and includes a device (57, 77, 78, 79) for injecting a reducing gas containing CO and hydrogen into the said prereduction reactor (56, 70), the said gas fluidizing the said bed of particles (59, 71);
- a gasification reactor (37) comprising means for producing CO and hydrogen from carbonaceous materials (42) and from oxygen, the solid particles present in the said reactor (37) forming a circulating fluidized bed (83);
- means (50) for separating the said reducing gas from the particles that it transports, and means for sending the said reducing gas thus purified back into the said prereduction reactor (56, 70);
- means for extracting the particles, especially particles of metallic iron, which are produced by the plant, comprising a dense fluidized bed of particles (64, 74) ensuring segregation of the said particles of metallic iron;
- means for making the said prereduction reactor (56, 70) communicate with a segregation compartment which is provided with means (62, 79) for forming the said dense fluidized bed (64, 74) therein and which is provided with means (66, 67, 81, 82) for extracting the said particles from the said dense bed (64, 74);
characterized in that the said plant comprises, in succession along the path of the said solid particles:
- the said gasification reactor (37) containing the said circulating fluidized bed (83) of solid particles;
- the said means (50) for separating the said reducing gas from the particles that it transports;
- a pipe (49) making the said gasification reactor (37) communicate with the said means (50) for separating the said particles from the said reducing gas leaving the gasification reactor (37);
- the said prereduction reactor (56, 70) which collects the said particles leaving the said separation means (50) and which contains the said circulating fluidized bed (59, 71, 72);
- the said means for making the said prereduction reactor (56, 70) communicate with a segregation compartment which is provided with means (62, 79) for forming the said dense fluidized bed (64, 74) therein and which is provided with means (66, 67, 81, 82) for extracting the said particles from the said dense bed (64, 74);
- and a pipe (65, 80) making the said segregation compartment communicate with the said gasification reactor (37) so that the gases and the solid particles escaping from the said segregation compartment are taken into the said gasification reactor.

2. Plant according to Claim 1, characterized in that the said segregation compartment constitutes a reactor (61) separate from the said prereduction reactor (56, 70).

3. Plant according to Claim 1, characterized in that, in the said prereduction reactor (70) which collects the said solid particles leaving the said separation means (50), the said particles are fluidized so as to form the said dense fluidized bed (71) in which the reduction of the iron ore and the segregation of the particles take place, the said means (81, 82) for extracting the particles produced by the plant being connected to the said prereduction reactor (70).

4. Plant according to Claim 3, characterized in that the prereduction reactor (70) comprises at least one transverse partition (75, 76) dividing the said prereduction reactor (70) into a plurality of compartments (72, 73, 74) communicating via their upper part, the said solid particles passing in succession through these compartments, each of the said compartments (72, 73, 74) having its own means (77, 78, 79) for fluidizing the solid particles that it contains, the means (79) for fluidizing at least the last compartment (74) being controlled so as to promote segregation of the particles that it contains according to their density, and the said means (81, 82) for extracting the particles being connected to the said last compartment (74).

5. Plant according to one of Claims 1 to 4, characterized in that it comprises means (52) for decarbonizing and for dehydrating the gases leaving the separation means (50) and comprises means (53, 54, 57, 62, 68, 77, 78, 79, 84) for sending the said gases into the said prereduction reactors (56, 70) and/or the said gasification reactor (37) and/or the said segregation compartment (61, 70).
